# EUROPEAN PATENT SPECIFICATION

(11) **EP 0 683 969 B1**
(45) Date of publication and mention of the grant of the patent: **08.03.2000**
(21) Application number: 95303404.8
(22) Date of filing: 22.05.1995
(51) Int. Cl.: A01D 34/73

(54) **Rotary cutters**
Rotationsmäher
Outils coupants rotatifs

(30) Priority: 25.05.1994 GB 9410427; 19.12.1994 GB 9425567
(43) Date of publication of application: 29.11.1995
(73) Proprietor: EASYTRIM LTD, Newdigate Dorking, Surrey RH5 5BX (GB); Komeco Beheer BV, 8250 AA Dronten (NL)
(72) Inventor: Bessinger, Henry John, Dorking, Surrey RH5 5BX (GB)
(74) Representative: Godsill, John Kenneth

(56) References cited:
- FR-A- 2 231 484
- FR-A- 2 322 530
- FR-A- 2 346 959
- FR-A- 2 358 818
- GB-A- 1 514 604
- GB-A- 2 272 624
- US-A- 4 062 114
- US-A- 4 199 926
- US-A- 4 382 356
- US-A- 4 513 563
- US-A- 4 825 627

## Description

The present invention relates to rotary cutters and is applicable in particular to rotary cutters known as filament trimmers as also to other forms of grass and like cutters.

A filament trimmer conventionally has a cutting element in the form of a filament which is rotated about an axis which is normally held vertical in use in order to provide a cutting action for grass and other vegetable matter. Such trimmers are normally marketed with automatic feed devices and for that purpose contain a reel of the filament which can be fed outwardly automatically when required, i.e. when, as is often the case, the filament breaks. Other forms of strimmer, normally petrol driven, require a manual feed of filament from the reel to renew the cutting length.

Nevertheless such devices present considerable problems, especially frequent filament breaking and the difficulty of renewing the broken filament owing to filament or spool jamming. In order to provide a solution to those problems, U.K. Specification No. 2272624 proposes the use of a cutting element having an elongate cutting portion together with an enlarged retaining portion, e.g. in the form of a sphere or part sphere, providing a pivotal area for the cutter. Thus, individual cutting elements are provided, being mounted on a mounting portion of a cutter head in such a way that they can extend through the mounting portion and project beyond it whilst being retained by the abutment of the mounting portion against the enlarged retaining portion. The parts are so dimensioned that the cutting element can pivot bodily with respect to the mounting portion about an angle of at least 5° and preferably at least 40° on all sides of a radially extending position. This minimises bending of the element and thus reduces the frequency of breaking. Moreover, a variety of simple means can be devised for readily mounting and replacing such cutting elements. In one example, a radially extending channel is provided which is open along one side so that the cuting element can be slotted nto the channel. In a preferred embodiment, the cutting element has a thickened portion between its enlarged retaining portion or head and the remaining cutting portion so that the cutting element has a larger cross-sectional area in the region proximal to the retaining portion than in the region distal to the retaining portion. This strengthens the cutting element at the area most frequently subjected to breakage.

French Patent Application No. 2358818 discloses a cutter assembly in which a flexible cutter is retained between two flange portions of the head assembly. The flexible cutter is able to bend in a plane substantially parallel to the planes of the two flange portions.

According to the present invention, there is provided a rotary cutter head assembly comprising a cutter head for rotation about a first axis, and a cutting element which is carried by the cutter head for pivoting movement, through an angle of at least 45° in a direction opposite to the intended direction of rotation, relative to the cutter head about a second axis which is parallel to and spaced from the first axis, characterised in that the cutter head comprises first and second flanges which are spaced apart from each other to define a peripheral channel, the first and second flanges being provided with retaining means for the cutting element, and the cutting element comprising a spherical retaining portion having a first diameter which is larger than the spacing between the flanges, which retaining portion is engaged between the flanges which retaining portion is engaged between the flanges by the retaining means, a cylindrical centering portion having a second diameter which is smaller than the first diameter, and a filamentary flexible elongate cutting portion which has a cross-section smaller than that of the cetering portion, the retaining means of the first flange comprising an aperture which is sized to permit the passage therethrough of the spherical retaining portion, the aperture having an elongate extension having a width which is smaller than the first diameter and larger than the second diameter, whereby the cutting element is connectable to the head by passing the cutting portion through the aperture to emerge from the channel, allowing the centering portion to pass into the channel through the elongate extension of the aperture, and allowing the spherical retaining portion to pass through the aperture into the channel, there to be retained by the aperture and by the retaining means of the second flange, the centering portion co-operating with the flanges to hold the spherical retaining portion in engagement with the aperture and with the retaining means on the second flange.

The locating means may be positioned and the said channel may have a peripheral extent such that the said cutting element can pivot through 120° about the axis of rotation of the head.

The inventor has discovered that, whilst it is important that the cutting element has a certain freedom to rotate, thus to minimise bending, the most important area in which pivoting should be enhanced is that which, in use, is in a substantially horizontal plane. Allowing for bendin in the plane at rignt angles thereto is not as significant with regard to breakage compared even with the examples given earlier.

The inventor has appreciated that such mechanisms in the form as above described and also in alternative, but similar, formations can equally be used readily to load and release cutting elements of different formations. For example, consider a cutting element of a form having a perforated head through which a retaining pin should pass. The retaining pin can be inserted through the aforementioned aperture in the first flange or wall portion and be retained by rotation of an associated cover plate. Equally, the above structures can be useful with cutting elements of a form having an enlarged head of generally circular cylindrical form with an axis extending, in use, substantially vertically. The above-described structures can support and release such an element in the same way as a cutting element of the kind having an enlarged substantially spherical retaining portion.

For a better understanding of the present invention and to show how the same may be carried out into effect, reference will now be made, by way of example only, to the accompanying drawings, in which:
Fig. 1 shows a perspective view of part of a rotary cutter;
Fig. 2 shows a perspective view of a replaceable head for a rotary cutter,
Fig. 3 shows a diagrammatic view of a cutting element being inserted into a replaceable head;
Fig. 4 is a perspective view of a second embodiment of a replaceable head;
Fig. 5 is a plan view of the embodiment shown in Fig. 4;
Fig. 6 is a cross-section on the line A-A of Fig. 5;
Fig. 7 is a view of an alternative embodiment, especially as an adaption to an existing rotary cutter; and
Fig. 8 is a plan view of a rotatable end member of the embodiment of Fig. 7.

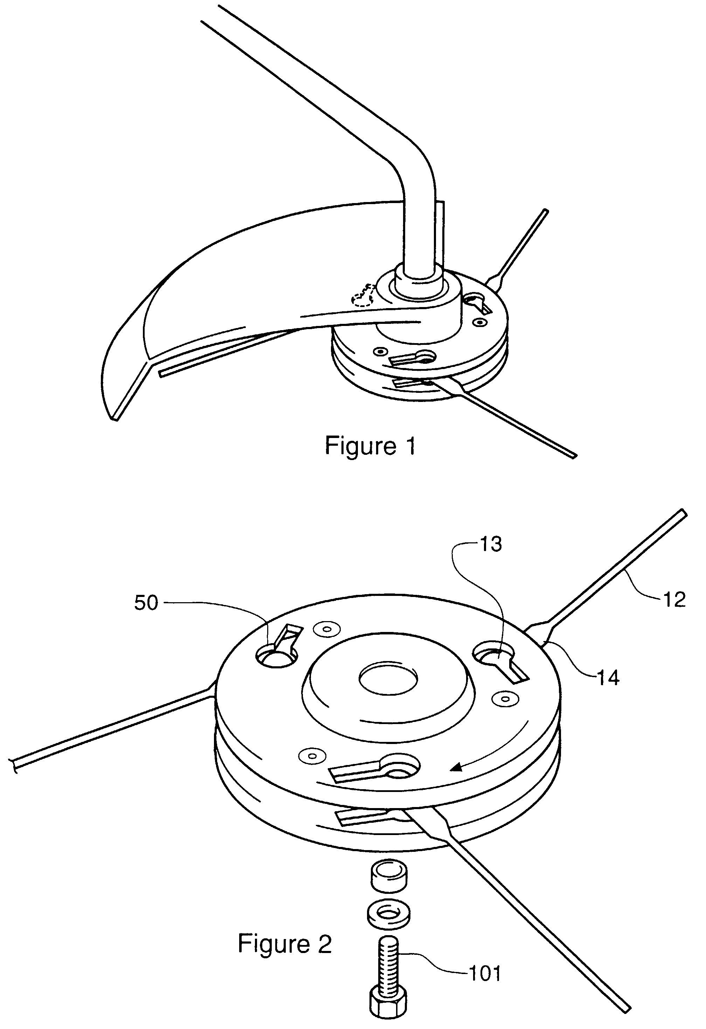

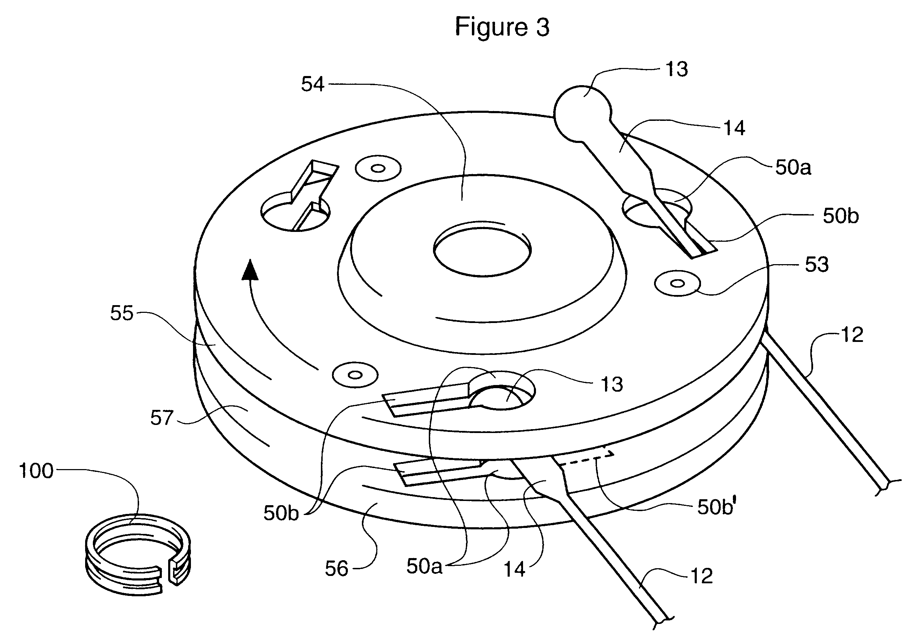

Figure 1 shows a perspective view of part of a rotary cutter, or trimmer, on which a rotatable head embodying the present invention has been replaceably mounted. Figure 2 shows a perspective view of the head removed from the cutter, and Figure 3 is a diagram showing loading of the head.

As can be seen in Figures 2 and 3, the rotatable head is especially designed for use with replaceable cutting elements of the kind shown, i.e. a cutting element comprising an enlarged, spherical, retaining portion 13, an elongate filamentary cutting portion 12 and an intermediate enlarged strengthening portion 14 formed integrally between the portions 12 and 13.

In the example shown in Figures 2 and 3, each of the flange portions has three openings 50, so that the head can simultaneously carry up to three cutting elements. There could be more or fewer openings. Each opening 50 is in a form generally corresponding to that of the cutting element, i.e. it has a circular aperture portion 50a, which is wide enough to allow the retaining portion to pass through it, and from which extends an elongate aperture portion 50b wide enough for the passage through it of the strengthening portion 14 of the cutting element, but not wide enough to allow passage of the retaining portion. This portion 50b in each terminates short of the flange periphery and thus the openings 50 are of generally key-hole shape.

The present embodiment is made up of a flange arrangement comprising a pair of annular concentric disc-like members which define flange portions 55 and 56 having therebetween a circumferentially extending channel 57. The upper member has a pressed-out boss 54 by which the head is releasably attached to the rotary cutter, for example by the nut and bolt arrangement 101 shown in Fig. 2.

In the embodiment shown, the flange portions are separated by a distance smaller than the diameter of the enlarged retaining portion of the cutting element. The flange portion can have a larger spacing if, for example, the edge of the circular aperture 50a is turned into the channel 57 to hold the retaining portion 13 in place. The flange portions are held together by the use of rivets 53 (Fig. 3). These rivets 53 are located in pressed-out bosses which space the flange portions apart by the required amount. Alternatively, continuous welding or spot welding or any other suitable form of fixing method could be used. Alternatively, spacing parts could be used between the two flange portions, which spacing parts would be held in place by the rivets 53.

This arrangement allows a cutting element to be relatively easily inserted and replaced in the head, as well as being pivotally retained in the head. In order to fit a cutter into the head shown, the filament portion 12 is inserted into the slot 50b, and the end is pulled through the channel 57. The head 13 is then pushed down into the channel 57 through the aperture 50a. The cutter is then able to pivot freely while being held in place by the head 13 abutting the edges of the opposed apertures 50a.

Removal of a cutter is simply the reverse of insertion. A tool, or a spare cutting element, is used to push the retaining portion of the retained cutting element through one of the circular apertures 50a. The strengthening portion 14 is simultaneously pushed through the corresponding elongate aperture 50b. The cutting element is then pulled out of the head, the filamentary portion being pulled through the channel 57.

As shown in the drawing, the elongate apertures 50b in the flanges 55 and 56 extend substantially in the same direction. Alternatively, these apertures 50b may extend in opposite directions (as shown by aperture 50b' in Figure 3). Such use of opposing apertures 50b and 50b' serves to prevent the cutter becoming displaced from the head, and allows the head to be used successfully in either direction of rotation.

In one alternative, one of the flanges 55 or 56 has only the circular aperture 50a to provide a locating region for the head 13 of the cutter.

In another alternative, only one of the flange portions has openings 50.

The embodiment shown in Figs. 1, 2 and 3 is preferably made from a metal such as mild or stainless steel, or other suitable material. If the head is manufactured from a plastics material, for example, metal inserts 100 could be used in the apertures 50a to prevent excessive wear of the head.

Embodiments of the present invention allow the cutting element to pivot through at least 45° in a direction opposite to the direction of rotation. Preferably, this angle of rotation is at least 120°. In the embodiment described above, the rivets holding the two flange portions together limit the amount through which the cutting elements can rotate. The head preferably allows the cutting element to pivot by a small amount, for example 3° to 5°, about an axis through the retaining portion 13 in the plane of the head.

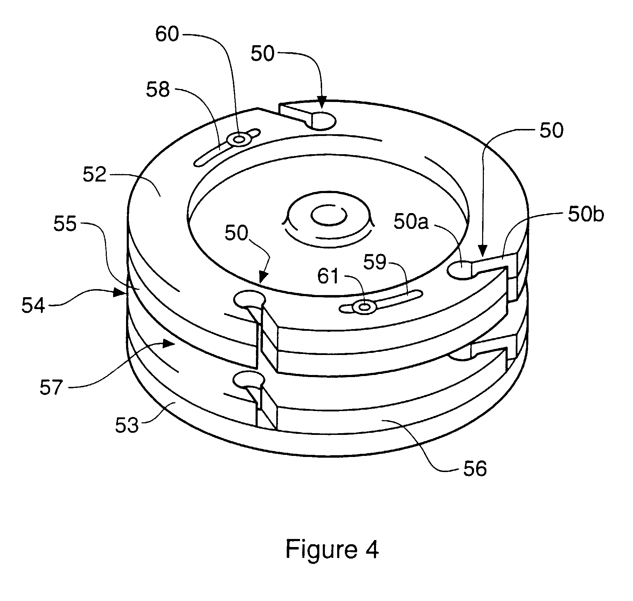

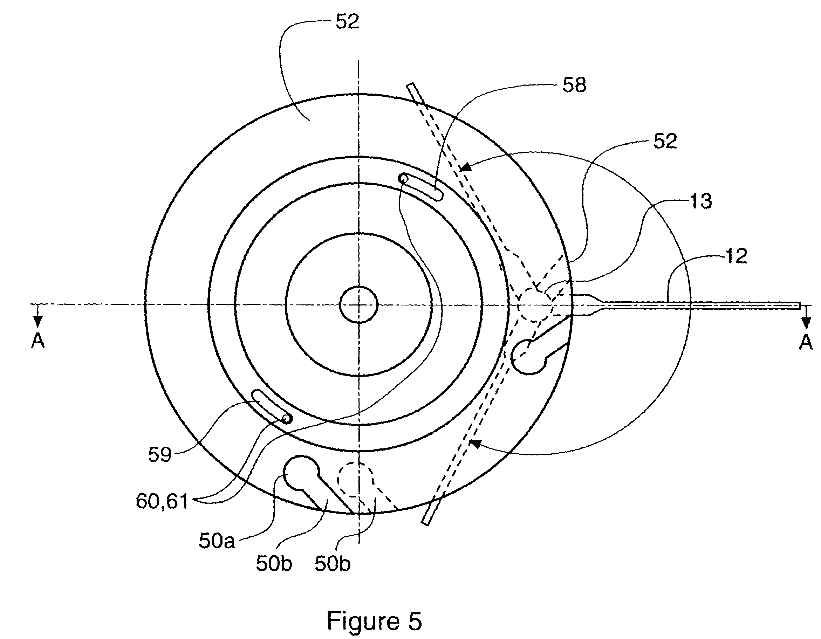

A second embodiment of the present invention is shown in Figures 4, 5 and 6 and comprises three main parts: two end plates 52 and 53 and an intermediate flange arrangement similar in construction to that of the first embodiment. The channel 57 again has a radial depth sufficient for it to extend radially inwardly of each circular aperture 50a.

The flanges 55 and 56 have respective apertures 50, which comprise a circular aperture 50a and elongate apertures 50b, as before. In this second embodiment, however, the elongate apertures extend to the periphery of the associated flange 55 or 56.

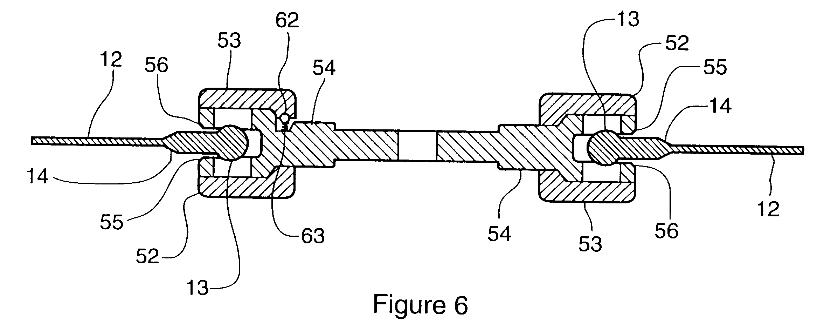

It will be seen that the upper plate 52 can be rotatably mounted in such a way as to ride on a ball bearing 62 spring biased by a spring 63 from within a cylindrical aperture in the member 54 (Fig. 6).

It is also possible for the lower plate 53 to be slotted and rotatably attached as by bolts and arcuate slots, as is the upper plate 52 to make a reversible arrangement. In the alternative, the upper plate need not be provided at all and it has been found in that case that, in use, the cutting elements are retained and do not become detached.

The filamentary form of cutting element is designed to be inserted into rotatable head of Figs. 4, 5 and 6 in with a vertical component of motion, as considered in the normal orientation of use, via openings in the head. In the example shown in Fig. 4, the head has three such openings 50, so that the head can simultaneously carry three cutting elements. Each opening 50 is in a form generally corresponding to that of the cutting element, i.e. it has a circular aperture portion 50a from which extends an elongate aperture portion 50b through which the strengthening portion 14 of the cutting element can pass.

As in the first embodiment, it will be seen that a substantial pivoting angle is possible for the cutting elements, in particular, of more than 90° and in this example of about 250°. Of course, the channel 57 need not be continuous so that in the region of the apertures 50 there merely needs to be a channel portion which extends for a given circumferential distance on at least one side of the aperture 50 to allow for a desired amount of rotation, e.g. 45°, in at least one direction, i.e. at least opposite to the intended direction of rotation. With particular reference to Figure 6, as seen in cross-section, the channel 57 is sufficiently deep vertically to allow for pivoting of the cutting element about a horizontal axis, e.g. by about 20° upwardly and 20° downwardly but it has been found that significant angular displacement in that dimension is not of major importance.

It will be seen so far that, in respect of a cutting element of the kind having a pivoted, enlarged, retaining portion, there is now provided a mounting arrangement in which the cutting element extends with a radial component of direction outwardly through a passage which has a circumferential extent sufficient to provide for substantial pivoting of the cutting element, e.g. through at least 45° in the direction opposite to the intended direction of rotation. By appropriate design, an adequate circumferential length of the channel or passage can be provided so that substantially greater angles of pivoting are easily possible. There is also provided, for a variety of different designs of cutting element, a relatively simple and easy to use replacement system in which an entrance zone is provided for introducing the element into the mounting portion and a rotatable and/or slidable member is provided which can be displaced to a position in which the entrance zone is at least partially impeded or closed, thus to prevent accidental removal of the cutting element 14.

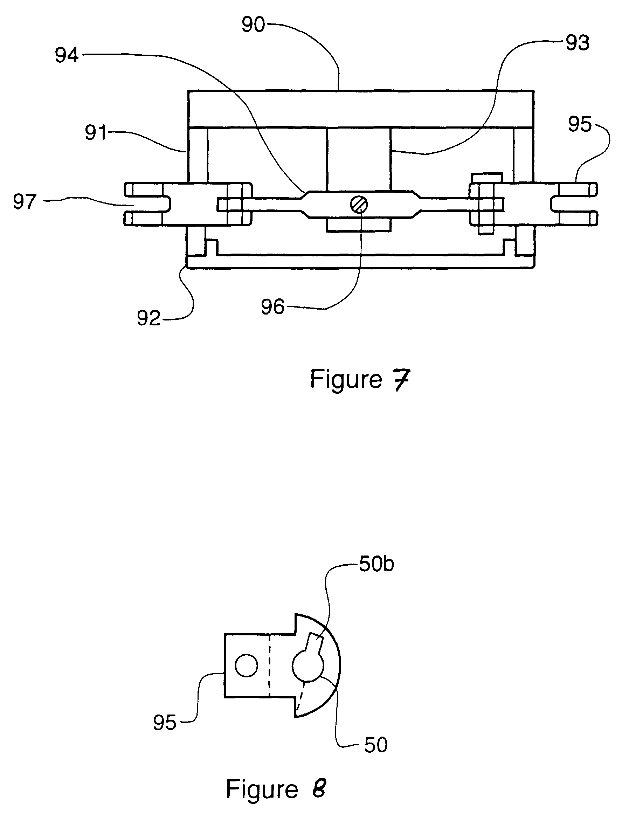

Figures 7 and 8 give a further assembly based upon the principle of the preceding example but designed as an adaption to an existing rotary cutter. Figure 7 illustrates the conventional housing of the cutter head, including a fan 90, plastic cylindrical wall 91, enclosure member 92 and motor drive shaft 93.

The device for modifying this conventional form of rotary cutter comprises three parts including a supporting body 94 and two end members 95. The main body 94 is centrally apertured to be inserted over the shaft and has a set screw or bolt 96 to enable it to be secured in place. It would be manufactured with a variety of lengths to suit a variety of diameters of rotary cutter head. Attached to the ends of this member are the end members 95 which project through circular apertures in the cylindrical wall 91. These circular apertures will be specially drilled for this purpose. The free end regions of these end members are slotted to provide channels 97, the flanges or portions on either side of the channel corresponding to the flange or wall portions of earlier embodiments. In this example and as shown in Figure 8, the upper portion is apertured in a manner similar to that of Figure 3. The lower member or portion can be similarly formed or may simply have a circular recess in it in which the retaining portion 13 of the cutting element can sit.

Embodiments of the present invention are intended for use with cutting elements having a spherical retaining portion, a filamentary cutting portion and an intermediary strengthening portion, as described above. By constructing cutting elements having a common size of retaining and strengthening portions, one cutting head can be used with several different sizes of cutter. For example, a thin filamentary portion could be used for light work, and a thick filamentary portion could be used for heavier work.

## Claims

1. A rotary cutter head assembly comprising a cutter head for rotation about a first axis, and a cutting element (12, 13, 14) which is carried by the cutter head for pivoting movement, through an angle of at least 45° in a direction opposite to the intended direction of rotation, relative to the cutter head about a second axis which is parallel to and spaced from the first axis, characterised in that the cutter head comprises first and second flanges (55, 56) which are spaced apart from each other to define a peripheral channel (57, 97), the first and second flanges (55, 56) being provided with retaining means for the cutting element, and the cutting element comprising a spherical retaining portion (13) having a first diameter which is larger than the spacing between the flanges (55, 56), which retaining portion is engaged between the flanges by the retaining means, a cylindrical centering portion (14) having a second diameter which is smaller than the first diameter, and a filamentary flexible elongate cutting portion (12) which has a cross-section smaller than that of the centering portion, the retaining means of the first flange (55) comprising an aperture (50a) which is sized to permit the passage therethrough of the spherical retaining portion (13), the aperture (50a) having an elongate extension (50b) having a width which is smaller than the first diameter and larger than the second diameter, whereby the cutting element is connectable to the head by passing the cutting portion (12) through the aperture (50a, 50b) to emerge from the channel (57, 97), allowing the centering portion to pass into the channel (57, 97) through the elongate extension (50b) of the aperture, and allowing the spherical retaining portion (13) to pass through the aperture (50a) into the channel (57, 97), there to be retained by the aperture and by the retaining means of the second flange (56), the centering portion (14) co-operating with the flanges (55, 56) to hold the spherical retaining portion (13) in engagement with the aperture and with the retaining means on the second flange (56).

2. An assembly, as claimed in claim 1, wherein the locating means are positioned and the said channel (57) has a peripheral extent such that the said cutting element can pivot through 120° about the axis of rotation of the head.

3. An assembly as claimed in claim 1 or 2, wherein the elongate extension (50b) extends from the aperture (50a) in a direction which is substantially perpendicular to a radial line passing through the aperture.

4. An assembly as claimed in claim 1, 2 or 3, wherein the elongate extension (50b) extends from the first aperture (50a) portion to the periphery of the first flange (55).

5. An assembly as claimed in claim 1, 2 or 3, wherein the elongate extension (50b) terminates short of the periphery of the first flange (55).

6. An assembly as claimed in any one of the preceding claims, wherein the second flange (56) includes pivotal locating means for the spherical retaining portion (13) of the cutting element.

7. An assembly as claimed in claim 6, wherein the second flange (56) is recessed opposite the said locating means of the said first flange (55) to provide pivotal locating means for the spherical retaining portion.

8. An assembly as claimed in claim 6, wherein the locating means of the second flange (56) comprise on aperture (50a) in the second flange (56) opposite the aperture (50a) in the first flange (55) for pivotally locating said spherical retaining portion (13), said aperture (50a) being sized to permit the passage therethrough of the spherical retaining poriton (13), of the cutting element.

9. An assembly as claimed in claim 8, wherein the aperture (50a) in the second flange (56) has an elongate extension (50b), extending from the aperture (50a), and having a width which is smaller than the first diameter and larger than the second diameter.

10. An assembly as claimed in claim 9 , wherein the second aperture extends to the periphery of the second flange portion.

11. An assembly as claimed in claim 8, 9 or 10 , wherein respective elongate extensions (50b) in the first and second flanges (55, 56) extend in substantially the same direction.

12. An assembly as claimed in claim 9, 10 or 11, wherein respective elongate extensions (50b) in the first and second flanges (55,56), extend in substantially opposite directions.

13. An assembly as claimed in any preceding claim wherein there is provided a plurality of pivotal locating means to enable a plurality of cutting elements to be used.

14. A rotary cutter having a cutter assembly as claimed in any preceding claim.

## Patentansprüche

1. Rotierende Schneidkopfbaugruppe, umfassend einen Schneidkopf, der sich um eine erste Achse dreht, und ein Schneidbauteil (12, 13, 14), das der Schneidkopf trägt und das eine Schwenkbewegung um ein Winkel von mindestens 45° in einer Richtung gegen die vorgesehene Drehrichtung ausführen kann, und zwar bezogen auf den Schneidkopf um eine zweite Achse, die zur ersten Achse parallel ist und von ihr Abstand hat, dadurch gekennzeichnet, dass der Schneidkopf einen ersten und einen zweiten Flansch (55, 56) aufweist, die voneinander Abstand haben und einen Kanal (57, 97) am Umfang bestimmen, wobei der erste und der zweite Flansch (55, 56) mit Haltevorrichtungen für das Schneidbauteil versehen sind, und dass das Schneidbauteil umfasst: einen kugelförmigen Halteabschnitt (13), der einen ersten Durchmesser hat, der größer ist als der Abstand zwischen den Flanschen (55, 56), wobei die Haltevorrichtung zwischen den Flanschen in den Halteabschnitt eingreift; ein zylindrisches Zentrierteil (14), das einen zweiten Durchmesser hat, der kleiner ist als der erste Durchmesser; und einen filamentartigen flexiblen länglichen Schneideabschnitt (12) , dessen Querschnitt kleiner ist als der Querschnitt des Zentrierteils, und dass die Haltevorrichtung des ersten Flanschs (55) eine Öffnung (50a) enthält, die so bemessen ist, dass der kugelförmige Halteabschnitt (13) durch sie hindurch gehen kann, und die Öffnung (50a) einen länglichen Fortsatz (50b) hat, dessen Breite geringer ist als der erste Durchmesser und größer als der zweite Durchmesser, wodurch man das Schneidbauteil mit dem Kopf verbinden kann, indem man den Schneideabschnitt (12) so durch die Öffnung (50a, 50b) führt, dass er aus dem Kanal (57, 97) austritt, damit der Zentrierteil durch den länglichen Fortsatz (50b) der Öffnung in den Kanal (57, 97) gelangen kann, und damit der kugelförmige Halteabschnitt (13) durch die Öffnung (50a) in den Kanal (57, 97) gelangen kann und dort von der Öffnung und der Haltevorrichtung des zweiten Flanschs (56) gehalten wird, wobei das Zentrierteil (14) mit den Flanschen (55, 56) zusammenwirkt und den kugelförmigen Halteabschnitt (13) im Eingriff mit der Öffnung und der Halterungsvorrichtung auf dem zweiten Flansch (56) hält.

2. Baugruppe nach Anspruch 1, wobei die Haltevorrichtungen an geeigneter Stelle angebracht sind, und der Kanal (57) am Umfang eine Weite hat, so dass das Schneidbauteil über einen Winkel von 120° um die Drehachse des Kopfs schwenken kann.

3. Baugruppe nach Anspruch 1 oder 2, wobei sich der längliche Fortsatz (50b) von der Öffnung (50a) in einer Richtung erstreckt, die im wesentlichen senkrecht auf einer radialen Linie steht, die durch die Öffnung geht.

4. Baugruppe nach Anspruch 1, 2 oder 3, wobei sich der längliche Fortsatz (50b) vom ersten Öffnungsabschnitt (50a) zum Rand des ersten Flanschs (55) erstreckt.

5. Baugruppe nach Anspruch 1, 2 oder 3, wobei der längliche Fortsatz (50b) kurz vor dem Rand des ersten Flanschs (55) endet.

6. Baugruppe nach irgendeinem der vorhergehenden Ansprüche, wobei der zweite Flansch (56) eine Haltevorrichtung, die eine Schwenkbewegung erlaubt, für den kugelförmigen Halteabschnitt (13) des Schneidbauteils enthält.

7. Baugruppe nach Anspruch 6, wobei der zweite Flansch (56) gegenüber der Haltevorrichtung des ersten Flanschs (55) eine Aussparung hat, damit eine Haltevorrichtung, die eine Schwenkbewegung erlaubt, für den kugelförmigen Halteabschnitt entsteht.

8. Baugruppe nach Anspruch 6, wobei die Haltevorrichtung des zweiten Flanschs (56) eine Öffnung (50a) im zweiten Flansch (56) gegenüber der Öffnung (50a) im ersten Flansch (55) enthält, damit der kugelförmige Halteabschnitt (13) schwenkbar angeordnet wird, und die Öffnung (50a) so bemessen ist, dass der kugelförmige Halteabschnitt (13) des Schneidbauteils durch sie hindurch gehen kann.

9. Baugruppe nach Anspruch 8, wobei die Öffnung (50a) im zweiten Flansch (56) einen länglichen Fortsatz (50b) hat, der von der Öffnung (50a) ausgeht und eine Breite hat, die geringer ist als der erste Durchmesser und größer als der zweite Durchmesser.

10. Baugruppe nach Anspruch 9, wobei sich die zweite Öffnung bis an den Rand des zweiten Flanschabschnitts erstreckt.

11. Baugruppe nach Anspruch 8, 9 oder 10, wobei die jeweiligen länglichen Fortsätze (50b) im ersten und zweiten Flansch (55, 56) im wesentlichen in der gleichen Richtung verlaufen.

12. Baugruppe nach Anspruch 9, 10 oder 11, wobei die jeweiligen länglichen Fortsätze (50b) im ersten und zweiten Flansch (55, 56) im wesentlichen in entgegengesetzten Richtungen verlaufen.

13. Baugruppe nach irgendeinem der vorhergehenden Ansprüche, wobei zahlreiche Haltevorrichtungen, die eine Schwenkbewegung erlauben, bereitgestellt sind, damit man eine Anzahl Schneidbauteile verwenden kann.

14. Rotierende Schneidevorrichtung, die eine Schneidbaugruppe nach irgendeinem vorhergehenden Anspruch enthält.

## Revendications

1. Un ensemble à tête d'outil coupant rotatif comprenant une tête d'outil coupant prévue pour tourner autour d'un premier axe, et un élément de coupe (12, 13, 14) qui est porté par la tête d'outil coupant en vue d'un mouvement de pivotement, d'un angle d'au moins 45° dans une direction opposée à la direction prévue de rotation, par rapport à la tête d'outil coupant autour d'un second axe qui est parallèle au premier axe et écarté de celui-ci, caractérisé en ce que la tête d'outil coupant comprend de première et seconde brides (55, 56) qui sont écartées l'une de l'autre pour définir un canal périphérique (57, 97), les première et seconde brides (55, 56) présentant des moyens de retenue pour l'élément de coupe, et l'élément de coupe comprenant une partie de retenue sphérique (13) ayant un premier diamètre qui est plus grand que l'espace entre les brides (55, 56), partie de retenue qui est engagée entre les brides par les moyens de retenue, une partie de centrage cylindrique (14) ayant un second diamètre qui est plus petit que le premier diamètre, et une partie de coupe filamentaire souple allongée (12) qui présente une section transversale plus petite que celle de la partie de centrage, les moyens de retenue de la première bride (55) comprenant une ouverture (50a) qui est dimensionnée pour permettre le passage à travers elle de la partie de retenue sphérique (13), l'ouverture (50a) présentant un prolongement allongé (50b) ayant une largeur qui est plus petite que le premier diamètre et plus grande que le second diamètre, de sorte que l'élément de coupe peut être relié à la tête en faisant passer la partie de coupe (12) à travers l'ouverture (50a, 50b) pour déboucher du canal (57, 97), en permettant à la partie de centrage de passer dans le canal (57, 97) à travers le prolongement allongé (50b) de l'ouverture, et en permettant à la partie de retenue sphérique (13) de passer à travers l'ouverture (50a) dans le canal (57, 97), de manière à y être retenue par l'ouverture et par les moyens de retenue de la seconde bride (56), la partie de centrage (14) coopérant avec les brides (55, 56) pour maintenir la partie de retenue sphérique (13) en engagement avec l'ouverture et avec les moyens de retenue prévus sur la seconde bride (56).

2. Un ensemble tel que revendiqué à la revendication 1, dans lequel sont positionnés les moyens de mise en place et où ledit canal (57) présente une étendue périphérique telle que ledit élément de coupe peut pivoter de 120° autour de l'axe de rotation de la tête.

3. Un ensemble tel que revendiqué à la revendication 1 ou 2, dans lequel le prolongement allongé (50b) s'étend à partir de l'ouverture (50a) dans une direction qui est sensiblement perpendiculaire à une ligne radiale passant à travers l'ouverture.

4. Un ensemble tel que revendiqué à la revendication 1, 2 ou 3, dans lequel le prolongement allongé (50b) s'étend depuis la première partie d'ouverture (50a) jusqu'à la périphérie de la première bride (55).

5. Un ensemble tel que revendiqué à la revendication 1, 2 ou 3, dans lequel le prolongement allongé (50b) se termine très près de la périphérie de la première bride (55).

6. Un ensemble tel que revendiqué dans l'une quelconque des revendications précédentes, dans lequel la seconde bride (56) comprend des moyens de mise en place pivotants pour la partie de retenue sphérique (13) de l'élément de coupe.

7. Un ensemble tel que revendiqué à la revendication 6, dans lequel la seconde bride (56) est en creux à l'opposé desdits moyens de mise en place de ladite première bride (55) pour créer des moyens de mise en place pivotants pour la partie de retenue sphérique.

8. Un ensemble tel que revendiqué à la revendication 6, dans lequel les moyens de mise en place de la seconde bride (56) comprennent une ouverture (50a) dans la seconde bride (56) à l'opposé de l'ouverture (50a) prévue dans la première bride (55) pour une mise en place pivotante de ladite partie de retenue sphérique (13), ladite ouverture (50a) étant dimensionnée pour permettre le passage à travers elle de la partie de retenue sphérique (13) de l'élément de coupe.

9. Un ensemble tel que revendiqué à la revendication 8, dans lequel l'ouverture (50a) prévue dans la seconde bride (56) présente un prolongement allongé (50b), s'étendant à partir de l'ouverture (50a), et présentant une largeur qui est plus petite que le premier diamètre et plus grande que le second diamètre.

10. Un ensemble tel que revendiqué à la revendication 9 dans lequel la seconde ouverture s'étend jusqu'à la périphérie de la seconde partie de bride.

11. Un ensemble tel que revendiqué à la revendication 8, 9 ou 10 dans lequel des prolongements allongés respectifs (50b) des première et seconde brides (55, 56) s'étendent sensiblement dans la même direction.

12. Un ensemble tel que revendiqué à la revendication 9, 10 ou 11, dans lequel des prolongements allongés respectifs (50b) des première et seconde brides (55, 56) s'étendent dans des directions sensiblement opposées.

13. Un ensemble tel que revendiqué dans une revendication précédente quelconque dans lequel il est prévu une pluralité de moyens de mise en place pivotants pour permettre à une pluralité d'éléments de coupe d'être utilisés.

14. Un outil coupant rotatif présentant un ensemble à outil coupant tel que revendiqué dans une revendication précédente quelconque.
